# NOUVEAU FASCICULE DE BREVET EUROPEEN

(11) **EP 0 166 990 B2**
(45) Date de publication et mention de la décision concernant l'opposition: **10.03.1993**
(45) Mention de la délivrance du brevet: 04.01.1989
(21) Numéro de dépôt: 85106872.6
(22) Date de dépôt: 04.06.1985
(51) Int. Cl.: H02K 9/00, H02K 3/24, H02K 3/22

(54) **Dispositif de distribution d'un gaz de refroidissement à une extrémité sous frette de l'enroulement d'excitation du rotor d'un turbo-alternateur**
Vorrichtung zur Kühlgasverteilung an einem Erregerwickelkopf unter dem Endring eines Turbogeneratorläufers
Device for distributing a cooling gas at an excitation winding end under the retaining ring of a turbo generator rotor

(30) Priorité: 07.06.1984 FR 8408935
(43) Date de publication de la demande: 08.01.1986
(73) Titulaire: ALSTHOM, F-75784 Paris Cédex 16 (FR)
(72) Inventeur: Dieffenbacher, Yves, F-68210 Dannemarie (FR)
(74) Mandataire: Weinmiller, Jürgen

(56) Documents cités:
- DE-A- 1 613 196
- DE-B- 1 136 005
- FR-A- 1 100 805
- FR-A- 2 145 102
- GB-A- 805 878
- GB-A- 1 136 660
- BBC Nachrichten, Jahrgang 49, Nov. 1967, Heft 11, S. 553, 554

## Description

La présente invention concerne un dispositif de distribution d'un gaz de refroidissement à une extrémité sous frette de l'enroulement d'excitation du rotor d'un turbo-alternateur, comprenant un cylindre de matière électriquement isolante disposé immédiatement sous l'extrémité de l'enroulement, muni de lumières d'admission de gaz entre les bobines de cet enroulement, ainsi que des cloisons radiales et circonférentielles disposées entre le cylindre de matière isolante et le fût du rotor, et divisant l'orifice annulaire compris entre le cylindre de matière isolante et le fût en compartiments radiaux d'entrée de gaz frais et de sortie de gaz réchauffé, reliés les uns et les autres à des canaux d'arrivée et d'évacuation disposés entre les extrémités des bobinages.

On a déjà effectué la distribution du gaz de refroidissement aux extrémités sous frette de tels enroulements d'excitation en faisant pénétrer ce gaz à ces extrémités dans l'espace compris entre les bobines de l'enroulement et le fût de l'arbre, puis dans des canaux de ventilation fraisés dans l'épaisseur des conducteurs et dirigé suivant leur axe, par des orifices situés sur le flanc des bobines dans leur partie frontale. Après refroidissement de chaque conducteur, le gaz sortait dans des canaux radiaux traversant les conducteurs, puis dans des orifices des cales de fermeture d'encoche au-delà du bec de frette.

Un tel dispositif de refoidissement implique des trajets de refroidissement axiaux longs à l'intérieur des conducteurs, donc un refroidissement moins efficace aux extrémités que dans la partie interne à l'encoche, et par suite des différences de température notables entre les extrémités et cette dernière.

On a également effectué la distribution du gaz de refroidissement aux extrémités sous frette de l'enroulement d'excitation en faisant circuler ce gaz dans des compartiments radiaux collecteurs d'entrée et de sortie de gaz, fraisés dans le fût de l'arbre. Chacun de ces compartiments était en communication avec un espace entre les bobines de l'enroulement, servant soit à l'entrée, soit à la sortie du gaz. Le refroidissement des conducteurs s'effectuait transversalement dans de multiples cannelures transversales de ceux-ci, le gaz froid pénétrant dans ces cannelures par un flanc des conducteurs et ressortant par le flanc opposé. Le gaz réchauffé au contact des conducteurs débouchait dans un compartiment inférieur de sortie et rejoignait axialement un espace annulaire entre le plateau porte-frette et le plus grand bobinage. Il était évacué à l'extrémité de la frette par un ventilateur extracteur.

Ce dispositif nécessite des usinages coûteux de l'arbre du rotor pour former les canaux de ventilation d'admission, un système de distribution de sortie à l'extrémité sous la frette et un ventilateur-extracteur à cette extrémité.

On a aussi proposé dans le document GB-A-805878 un dispositif de distribution du gaz de refroidissement comportant un cylindre de matière électriquement isolante sous l'extrémité de l'enroulement, perce de nombreuses ouvertures reliées à des conduits multiples d'amenée et d'évacuation du gaz de refroidissement. Ceci rend la structure du dispositif complexe et sa fabrication coûteuse. Un autre dispositif connu est décrit dans le fascicule de brevet français FR-A-1 100 805.

On connaît aussi, par la livraison d'un turbogéné- rateur de 440 MVA à la Basin Electric Power Coope- rative, un dispositif de distribution d'un gaz de refroidissement à une extrémité sous frette de l'enroulement d'excitation d'un rotor. Un système de refroidissement à gaz est décrit dans le fascicule BBC Na- chrichten, novembre 1967, cahier 11, pages 553-555.

La présente invention a pour but de procurer un dispositif de distribution du gaz de refroidissement qui procure des trajets courts de circulation de ce gaz dans les extrémités du rotor, et assure une grande homogénéité de température des bobines de l'enroulement d'excitation, en évitant ainsi l'apparition de points chauds, mais qui soit de structure et de fabrication simples.

L'invention a donc pour objet un dispositif de distribution d'un gaz de refroidissement à une extrémité sous frette de l'enroulement d'excitation du rotor d'un turbo-alternateur, comprenant un cylindre de matière électriquement isolante disposé immédiatement sous l'extrémité de l'enroulement, muni de lumières d'admission de gaz entre les bobines de cet enroulement, ainsi que des cloisons radiales et circonférentielles disposées entre le cylindre de matière isolante et le fût du rotor, et divisant l'orifice annulaire compris entre le cylindre de matière isolante et le fût en compartiments radiaux d'entrée de gaz frais et de sortie de gaz réchauffé, reliés les uns et les autres à des canaux d'arrivée et d'évacuation disposés entre les extrémités des bobinages, les canaux étant eux-mêmes reliés à des canaux internes des conducteurs de l'enroulement par des ouvertures latérales de ces derniers, et les canaux d'évacuation étant reliés à un compartiment de sortie unique au centre de chaque pôle, caractérisé en ce que les compartiments radiaux d'admission de gaz frais étant reliés à des canaux sous encoches, débouchant par des lumières radiales entre les parties droites des bobines munies d'ouvertures latérales d'admission dans leurs canaux, les canaux internes aux parties des bobines perpendiculaires à l'axe du rotor débouchent dans des lumières d'admission dans les compartiments radiaux de sortie de gaz réchauffé.

Il répond en outre de préférence à au moins l'une des caractéristiques suivantes :
- Les canaux internes des conducteurs au voisinage de la table du rotor se prolongent jusqu'au delà du bord de la frette d'extrémité, et débouchent par des canaux radiaux traversant les cales de fermeture d'encoche dans l'entrefer.
- Les bobines d'extrémité comportent des cannelures transversales, les canaux de passage du gaz de refroidissement dans ces bobines sont perpendiculaires à leur axe, la zone centrale des bobines comporte des lumières d'admission dans des compartiments radiaux de sortie, eux-mêmes reliés à des fentes d'évacuation dans la table du rotorvers l'entrefer, et la zone proche des encoches de la table du rotor comporte d'une part des canaux de circulation de gaz entre les conducteurs et l'isolation d'encoche, débouchant dans des orifices d'échappement dans l'entrefer à travers les cales de fermeture d'encoche, et d'autre part des canaux circulaires débouchant dans un compartiment radial de sortie de gaz réchauffé.
- Les conducteurs d'extrémité perpendiculaires à l'axe du rotor comportent des cannelures transversales, et ceux proches des encoches de la table du rotor des canaux internes, et il est intercalé alternativement, entre les bobines perpendiculaires à l'axe du rotor, des lumières d'admission de gaz frais et d'évacuation de gaz réchauffé vers un compartiment de sortie, les conducteurs proches des encoches de la table du rotor comportent des lumières latérales d'admission de gaz frais dans des canaux internes, en communication avec des canaux radiaux d'évacuation dans l'entrefer au-delà du bord de la frette d'extrémité, et les canaux, entre les conducteurs d'extrémités perpendiculaires à l'axe du rotor sont séparés de façon étanche de ceux entre les conducteurs proches des encoches de la table du rotor.

Il est décrit ci-après, à titre d'exemples et en référence aux figures du dessin annexé, des circuits de distribution selon l'invention de gaz de refroidissement à une extrémité sous frette des enroulements d'excitation du rotor d'un turbo-alternateur.
La figure 1 représente en perspective avec arrachement partiel un tel circuit.
La figure 2 représente en vue partielle une première variante comportant des canaux longitudinaux à l'intérieur des enroulements.
La figure 3 représente en vue partielle développée une deuxième variante dans laquelle les enroulements d'extrémité sont cannelés, avec circulation du gaz de refroidissement à travers ces cannelures, puis soit vers un compartiment central de sortie, soit axialement entre les bobinages.
La figure 4 représente en vue partielle développée une troisième variante comprenant deux circulations de gaz distinctes, soit axiale, soit transversale à l'axe du rotor.
La figure 5 représente en coupe axiale la circulation axiale de la première fraction du gaz de la figure 4.

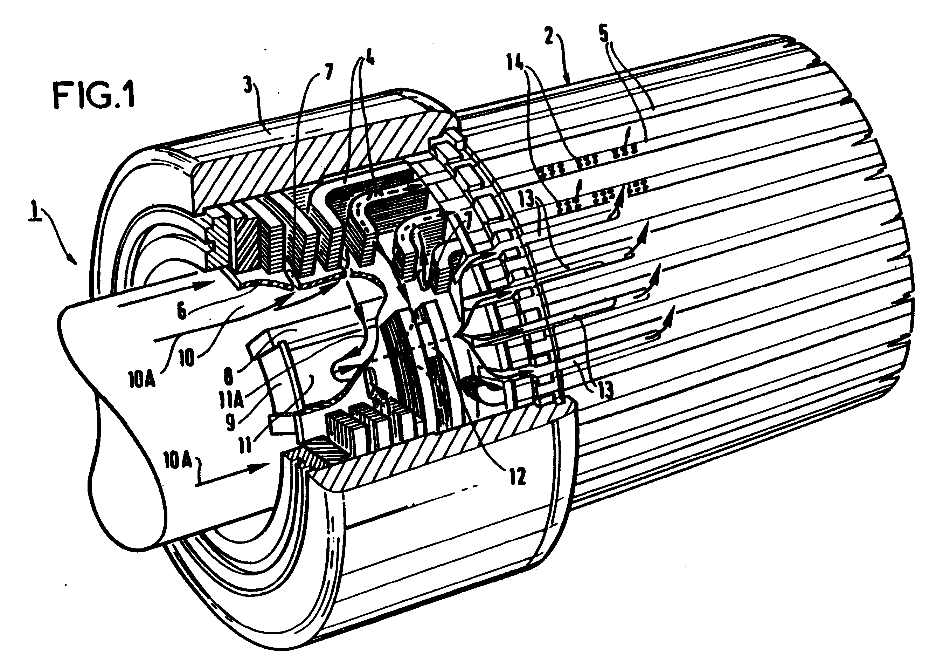

Dans la figure 1, le rotor entourant le fût 1 comporte une table 2 et une frette d'extrémité 3. Les enroulements d'extémité 4 se prolongent pour les barres (non visibles) de la table du rotor, disposées sur les cales de fermeture d'encoche 5.

La circulation de gaz de refroidissement représentée par les flèches est délimitée par le cylindre de matière isolante 6. L'intervalle compris entre ce cylindre et le fût du rotor est divisé par des cloisons radiales 8 et circonférentielles 9 en compartiments d'entrée de gaz froid 10 et compartiments 11 d'évacuation du gaz réchauffé. Le gaz pénétrant par les compartiments d'entrée 10 (flèches 10A) passe par des fentes 7 découpées dans le cylindre de matière isolante dans les canaux entre extrémités de bobinages, puis par des ouvertures latérales dans les canaux internes de ces enroulements.

Une première partie de ce gaz circule circonférentiellement, ressort entre les enroulements, puis descend par des lumières (flèches 11A) au droit de cales d'arrêt 12 dans le compartiment d'évacuation 11. Il se répartit à la sortie de ceux-ci sous l'extrémité de la frette 3 entre des encoches longitudinales 13 fraisées dans le centre d'un pôle dans la table du rotor, et s'évacue à l'extrémité de ces encoches dans l'entrefer.

Une seconde partie de ce gaz s'écoule longitudinalement vers des canaux internes des extrémités des conducteurs de la table du rotor au voisinage du bord de la frette, puis s'évacue dans l'entrefer par des canaux radiaux et des orifices 14 à travers les cales de fermeture d'encoche 5.

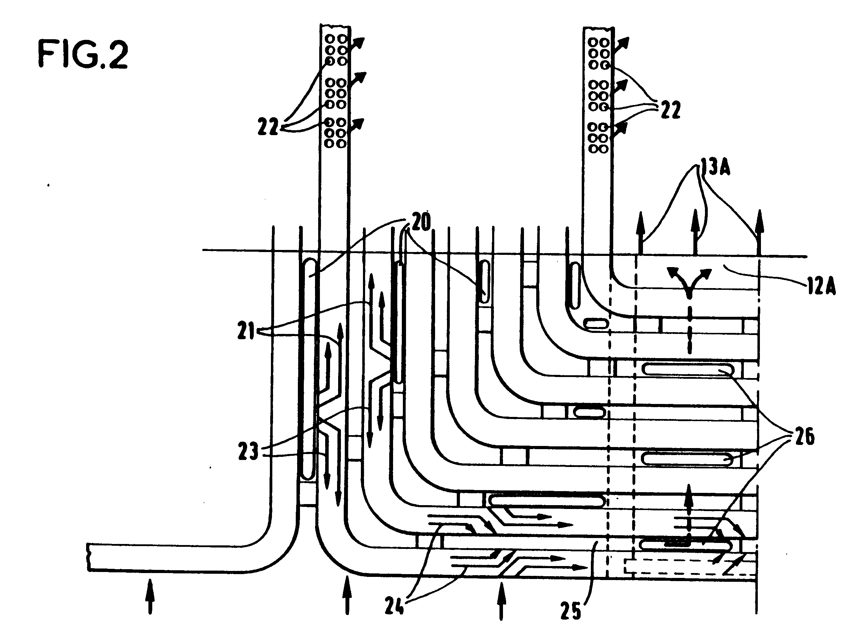

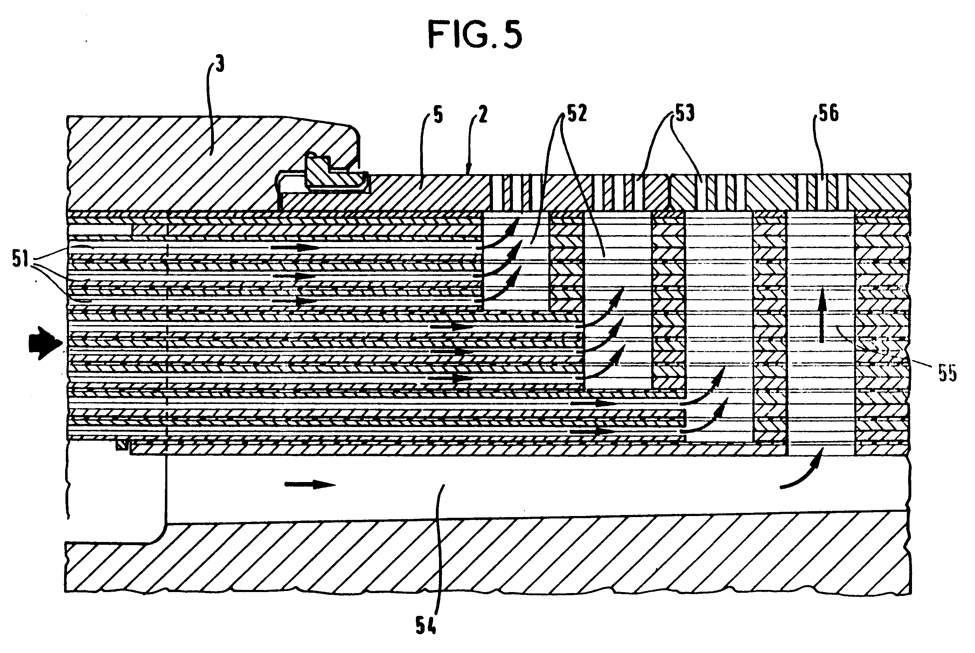

Dans la figure 2, le gaz de refroidissement, arrivant entre le fût et le cylindre de matière isolante, se répartit par des encoches radiales allongées longitudinalement 20 à travers ce cylindre dans les enroulements par un flanc de ceux-ci. Une première partie dans la partie droite voisine de la table de rotor, s'écoule (flèche 21) dans des canaux internes des enroulements au-delà du bord de la frette, puis s'évacue radialemment par des canaux radiaux ayant la forme de boutonnières dans les encoches, et s'échappe par des orifices 22 au travers des cales de fermeture d'encoche dans l'entrefer, comme il sera décrit ci-après plus en détail en référence à la figure 5.

Une seconde partie du gaz dans la partie frontale des bobines située sous la frette s'écoule (flèches 23) dans des canaux internes de cette partie frontale et s'échappe (flèches 24) par le flanc opposé de ces enroulements dans des canaux 25 de sortie entre ceux-ci, puis pénètre par des encoches radiales 26 dans un compartiment d'évacuation 12A. Il se répartit ensuite (flèches 13A) dans des encoches longitudinales fraisées dans la table du rotor au voisinage d'un pôle, au-delà de l'extrémité de la frette, et ressort dans l'entrefer, comme déjà indiqué en référence à la figure 1.

Ce type de refroidissement des extrémités des bobinages est associé de préférence à une ventilation axialo-radiale ou radiale de la partie interne aux encoches des parties droites des conducteurs.

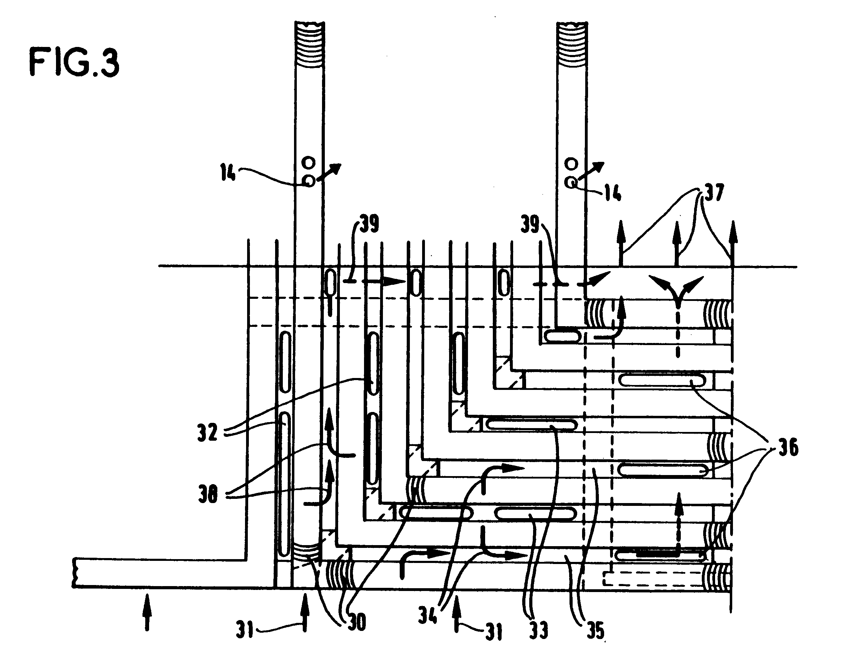

Dans la figure 3 les enroulements d'extrémité sont munis de multiples cannelures transversales 30. Le gaz de refroidissement, arrivant selon les flèches 31, se répartit par les encoches radiales allongées soit longitudinalement 32, soit circonférentiellement 33, entre les enroulements dans lesquels il pénètre par un flanc et dont il ressort par le flanc opposé (flèches 38) dans les espaces 35 entre les conducteurs. Son évacuation se fait alors de deux manières différentes:
a) pour la zone centrale, correspondant au centre d'un pôle:
   Le gaz réchauffé est admis dans le compartiment de sortie central du cylindre distribution par des ouvertures radiales 36. Il s'échappe alors par des encoches fraisées dans la table du pôle dans l'entrefer au-delà de la frette (flèches 37)
b) pour la zone située au droit des encoches du rotor:
   Le gaz réchauffé se dirige axialement dans l'espace entre les enroulements vers la table du rotor et se divise en deux parties. Une première partie circule dans l'encoche du rotor dans l'espace situé entre les conducteurs et l'isolation d'encoche. Il ressort alors dans l'entrefer au-delà de la partie de frette par des orifices d'échappement 14 dans les cales de fermeture d'encoche. Il peut aussi être acheminé vers les encoches fraisées au centre du pôle. Une seconde partie s'évacue, par des orifices de sortie du cylindre répartiteur et est canalisée par un second compartiment de sortie adjacent au métal de la table du rotor. Elle rejoint ainsi tangentiellement (flèches 39) la zone du centre d'un pôle pour s'échapper dans l'entrefer par les encoches fraisées au centre du pôle déjà mentionnées.

Ce type de ventilation des extrémités des enroulements peut être associé à une ventilation des parties droites des conducteurs situées dans les encoches de la table du rotor, à prise de gaz dans l'entrefer, ou bien du genre axialo-radial ou purement axial.

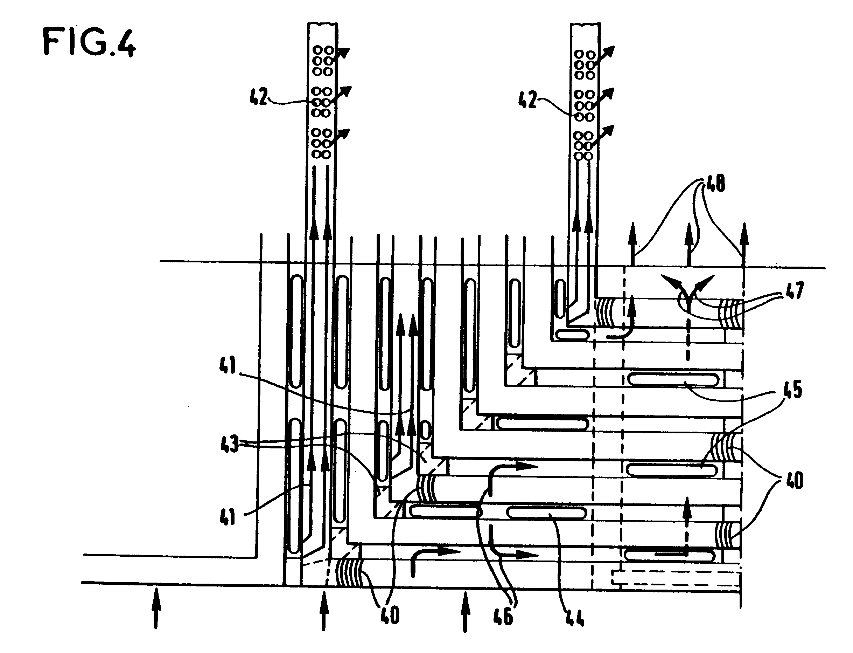

La figure 4 représente un dispositif de ventilation des enroulements d'extrémité à trajets internes de gaz en partie dans l'axe des conducteurs, en partie transversalement à ceux-ci. Les conducteurs présentent dans leur partie axiale dans le prolongement des encoches, des canaux internes dans leur axe.

Dans leur partie transversale à l'axe du rotor, ils présentent des cannelures transversales 40.

Le cylindre répartiteur de gaz frais distribue celui- ci dans les espaces d'entrée entre les bobinages.

Dans la partie droite des conducteurs, les entrées de gaz correspondant aux canaux axiaux sont situées sur leurs flancs à proximité de l'angle de brasage entre parties droites et parties transversales (flèches 41). Les canaux axiaux des conducteurs débouchent dans les encoches puis dans l'entrefer, par des boutonnières d'évacuation radiales 42, au-delà de la partie de frette, comme il sera décrit plus en détail en référence à la figure 5. Il n'y a aucun canal de sortie de gaz réchauffé entre les parties droites des conducteurs.

Dans la partie frontale des conducteurs, les canaux entre les enroulements sont alternativement des zones d'entrée et de sortie de gaz sous la réserve que plusieurs conducteurs peuvent être alimentés latéralement en série par le gaz froid. Cette zone est séparée de la zone des parties droites des conducteurs par des cales d'étanchéité 43, isolant l'un de l'autre les deux circuits de refroidissement.

Les orifices du cylindre distributeur assurent l'admission et l'évacuation du gaz de refroidissement. Les orifices d'admission 44 soit au droit des encoches du rotor, ceux d'évacuation 45 soit dans la zone centrale des pôles.

Le gaz frais ayant pénétré dans l'espace entre les enroulements d'entrée traverse les cannelures des parties frontales des conducteurs, puis débouche dans les canaux entre ceux-ci (flèche 46). Il passe par les orifices 45 dans le compartiment d'évacuation du cylindre répartiteur, est canalisé (flèches 47) dans l'espace entre le dernier enroulement et la table du rotor, pour s'échapper au centre d'un pôle dans des canaux débouchant dans l'entrefer (flèches 48), comme on le verra plus en détail en référence à la figure 5.

Ce type de ventilation peut s'associer à une ventilation axialo- radiale ou radiale des parties droites de l'enroulement inducteur du rotor.

La figure 5 représente la circulation des deux fractions du gaz de refroidissement, ayant refroidi les parties droites et les parties frontales des conducteurs, avec évacuation dans l'entrefer à travers les cales de fermeture d'encoche, les cas des dispositifs de distribution selon les figures 2 ou 4.

Le gaz circulant dans les canaux axiaux 51 des conducteurs sous la frette 3 passe dans les canaux radiaux 52 d'évacuation à travers ceux-ci, puis traverse la cale de fermeture d'encoche correspondantes par les orifices 53.

Des canaux tels que 54 fraisés dans la table du rotor assurent l'évacuation du gaz de refroidissement des conducteurs de la partie frontale. Ils communiquent avec des canaux radiaux 55 et des orifices 56 débouchant dans l'entrefer.

## Revendications

1. Dispositif de distribution d'un gaz de refroidissement à une extrémité sous frette (3) de l'enroulement d"excitation du rotor d'un turbo-alternateur, comprenant un cylindre de matière électriquement isolante (6) disposé immédiatement sous l'extrémité de l'enroulement, muni de lumières (7) d'admission de gaz entre les bobines de cet enroulement, ainsi que des cloisons radiales (8) et circonférentielles (9) diposées entre le cylindre de matière isolante et le fût (1) du rotor, et divisant l'orifice annulaire compris entre le cylindre de matière isolante et le fût en compartiments radiaux d'entrée de gaz frais (10) et de sortie de gaz réchauffé (11), reliés les uns et les autres à des canaux d'arrivée et d'évacuation disposés entre les extrémités des bobinages, les canaux étant eux-mêmes reliés à des canaux internes des conducteurs de l'enroulement par des ouvertures latérales de ces derniers, et les canaux d'évacuation étant reliés à un compartiment de sortie unique au centre de chaque pôle, caractérisé en ce que les compartiments radiaux d'admission de gaz frais étant reliés à des canaux sous encoches, débouchant par des lumières radiales (20, figure 2) entre les parties droites des bobines munies d'ouvertures latérales d'admission dans leurs canaux, les canaux (25) internes aux parties des bobines perpendiculaires à l'axe du rotor débouchent dans des lumières (26) d'admission dans les compartiments radiaux de sortie de gaz réchauffé.

2. Dispositif selon la revendication 1, caractérisé en ce que les canaux (51, figure 5) internes des conducteurs au voisinage de la table du rotor se prolongent jusqu'au-delà du bord de la frette d'extrémité et débouchent par des canaux radiaux (52) traversant les cales (5) de fermeture d'encoche dans l'entrefer.

3. Dispositif selon la revendication 1, caractérisé en ce que, les bobines d'extrémité comportant des cannelures transversales, les canaux de passage du gaz de refroidissement dans les bobines d'extrémité sont perpendiculaires à leur axe, la zone centrale des bobines comportant des lumières (36) d'admission dans des compartiments radiaux de sortie, eux-mêmes reliés à des fentes d'évacuation dans la table du rotor vers l'entrefer, la zone proche des encoches de la table du rotor comportant d'une part des canaux de circulation de gaz entre les conducteurs et l'isolation d'encoche, débouchant dans des orifices d'échappement dans l'entrefer à travers les cales de fermeture d'encoche, et d'autre part des canaux circulaires et débouchant dans un compartiment radial (11) de sortie du gaz réchauffé.

4. Dispositif selon la revendication 1, caractérisé en ce que les conducteurs d'extrémité perpendiculaires à l'axe du rotor comportant des cannelures transversales, et ceux proches des encoches de la table du rotor des canaux internes, entre les bobines perpendiculaires à l'axe du rotor sont intercalées alternativement des lumières d'admission de gaz frais (44) et d'évacuation de gaz réchauffé vers un compartiment de sortie (45), les conducteurs proches des encoches de la table du rotor comportant des lumières latérales d'admission de gaz frais dans des canaux internes, en communication avec des canaux radiaux d'évacuation dans l'entrefer au-delà du bord de la frette d'extrémité, les canaux entre les enroulements d'extrémité perpendiculaires à l'axe du rotor étant séparés de façon étanche (43) de ceux entre les conducteurs proches des encoches de la table du rotor.

## Patentansprüche

1. Vorrichtung zur Verteilung eines Kühlgases an einem unter einem Endring (3) liegenden Ende der Erregerwicklung des Rotors eines Turbogeneratorläufers, mit einem Zylinder aus elektrisch isolierendem Material (6), der direkt unter dem Ende der Wicklung angeordnet ist und Gaseinlaßöffnungen (7) zwischen den Spulen dieser Wicklung besitzt, und mit radial (8) und in Umfangsrichtung verlaufenden Trennwänden (9), die zwischen dem Zylinder aus isolierendem Material und dem Rotorschaft (1) angeordnet sind und die die zwischen dem Zylinder aus isolierendem Material und dem Schaft befindliche ringförmige Öffnung in radiale Einlaßabteile für Frischgas (10) und Auslaßabteile für aufgeheiztes Gas (11) trennen, welche mit Einlaß- und Auslaßkanälen verbunden sind, die zwischen den Enden der Wickel angeordnet sind, wobei Gaseinlaß- und Auslaßkanäle selbst mit inneren Kanälen der Wicklungsleiter durch seitliche Öffnungen dieser Leiter verbunden sind und die Auslaßkanäle mit einem einzigen Auslaßabteil in der Mitte jedes Pols verbunden sind, dadurch gekennzeichnet, daß, wenn die radialen Kaltgas-Einlaßabteile mit Kanälen unter den Nuten verbunden sind, die durch radiale Öffnungen zwischen den geraden Bereichen der Spulen der Wicklung, versehen mit seitlichen Einlaßöffnungen in ihren Kanälen münden, die inneren Kanäle (25) mit den Bereichen der Spulen senkrecht zur Rotorachse in Einlaßöffnungen in die radialen Auslaßabteile für erhitztes Gas münden.

2. Vorrichtung nach Anspruch 1, dadurch gekennzeichnet, daß die Kanäle (51, Fig. 5) im Inneren der Leiter in der Nähe des Rotortisches sich bis über den Rand des Endrings hinweg verlängern und über radiale Kanäle (52), die die Nutenverschlußkeile (5) durchqueren, in den Luftspalt münden.

3. Vorrichtung nach Anspruch 1, dadurch gekennzeichnet, daß im Fall, daß die Endspulen Querrillen (30, Figur 3) aufweisen, die Kühlgasdurchlaßkanäle in diesen Endspulen senkrecht zur ihrer Achse verlaufen, wobei die zentrale Zone der Spulen Einlaßöffnungen (36) in die radialen Auslaßabteile enthält, die selbst mit Auslaßschlitzen im Rotortisch zum Luftspalt hin verbunden sind, und wobei die Zone nahe den Nuten des Rotortisches einerseits Gasumlaufkanäle zwischen den Leitern und der Nutenisolierung, die in Auslaßöffnungen in den Luftspalt durch die Nutenverschlußkeile münden, und andererseits kreisförmige Kanäle aufweist, die in ein radiales Auslaßabteil (11) für erhitztes Gas münden.

4. Vorrichtung nach Anspruch 1, dadurch gekennzeichnet, daß im Fall, daß die zur Rotorachse senkrechten Endleiter Querrillen und die nahe den Nuten des Rotortisches liegenden Leiter innere Kanäle aufweisen, zwischen die zur Rotorachse senkrechten Spulen alternierend Einlaßöffnungen für Frischgas (44) und Auslaßöffnungen für erhitztes Gas (45) zu einem Auslaßabteil eingefügt sind, wobei die Leiter nahe den Nuten des Rotortisches seitliche Einlaßöffnungen für Frischgas in die inneren Kanäle aufweisen, die in Verbindung stehen mit radialen Auslaßkanälen in den Luftspalt jenseits des Rands des Endrings, und wobei die Kanäle zwischen den zur Rotorachse senkrechten Endleitern gegen die Kanäle zwischen den Leitern nahe den Nuten des Rotortisches abgedichtet sind (43).

## Claims

1. A device for distributing cooling gas under a retaining sleeve (3) at one end of the excitation winding of a turbo-alternator rotor, comprising a cylinder of electrically insulating material (6) disposed immediately under the end of the winding, provided with gas admission windows (7) between the coils of this winding, as well as radial (8) and circumferential partitions (9) disposed between the cylinder of insulating material and the rotor shaft (1) and dividing the annular orifice between the cylinder of insulating material and the shaft into radial compartments for cold gas inlet (10) and for hot gas outlet (11), both being connected to inlet and outlet channels disposed between the ends of the coils, the gas admission and exhaust channels being themselves connected to channels inside the conductors via side openings of the latters, and the exhaust channels being connected to a single outlet compartment in the center of each pole, characterized in that, the radial cold gas admission compartments being connected to channels under the slots opening out via radial windows (20, figure 2) between the rectilinear portions of the winding coils provided with lateral admission openings to their channels, the channels (25) inside the portions of the coils perpendicular to the rotor axis open out into admission windows (26) in the radial compartments for hot gas outlet.

2. A device according to claim 1, characterized in that the channels (51, fig. 5) inside the conductors in the vicinity of the rotor table extend beyond the edge of the end retaining sleeve, and open out into the air gap via radial channels (52) passing through the slot-closing wedges (5).

3. A device according to claim 1, characterized in that, the end coils including transverse grooves (30, figure 3), the cooling gas passing channels in the end coils are perpendicular to their axis, the central zone of the coils including admission windows (36) in radial outlet compartments which are themselves connected to exhaust slits in the rotor table leading to the air gap, and the zoner dose to the slots of the rotor table including on the one hand channels for allowing the gas to flow between the conductors and the slot insulation, opening out into exhaust orifices in the air gap through the slot-closing wegdes, and on the other hand circular channels opening out into a radial compartment (11) for hot gas outlet.

4. A device according to claim 1, characterized in that, the end conductors perpendicular to the axis of the rotor including transverse grooves, and those close to the slots in the rotor table including internal channels, alternate cold gas admission (44) and hot gas exhaust windows (45) leading to an outlet compartment are interposed between the coils which are perpendicular to the axis of the rotor, the conductors close to the slots in the rotor table including lateral cold gas admission windows in the internal channels, in communication with radial retaining sleeves and the channels between the end conductors perpendicular to the axis of the rotor being separated in a sealed manner (43) from those between the conductors close to the slots of the rotor table.
